## Europäisches Patentamt
## European Patent Office
## Office européen des brevets

(19)

(11) Numéro de publication: **0 022 114**

**A1**

(12) **DEMANDE DE BREVET EUROPEEN**

(21) Numéro de dépôt: **80870019.9**

(22) Date de dépôt: **27.03.80**

(51) Int. Cl.³: **B 01 D 3/00**

(30) Priorité: **02.04.79 LU 81110**

(43) Date de publication de la demande:
**07.01.81 Bulletin 81/1**

(84) Etats Contractants Désignés:
**BE DE FR GB IT NL**

(71) Demandeur: **EXERGIE Société de Personnes à
Responsabilité Limitée
Avenue Victor Emmanuel III, 67
B-1180 Bruxelles(BE)**

(72) Inventeur: **Wajc, Samuel J., Prof
av. de la Grande Boucle 13
B-1420 Braine l'Alleud(BE)**

(72) Inventeur: **Baron, Gino
Bleuckeveldlaan, 34
B-1980 Tervuren(BE)**

(74) Mandataire: **Van Malderen, Michel et al,
p.a. Freylinger & Associes 22 avenue J.S. Bach (bte 43)
B-1080 Bruxelles(BE)**

(54) **Installation de distillation.**

(57) L'installation comporte un ou plusieurs tuyaux (1) recueillant la vapeur provenant du bouilleur ou de l'étage précédent, l'amenant sous le plateau proprement dit (7), un dispositif anti-retour (3) empêche le retour du liquide d'un étage vers le suivant; sauf pendant la vidange de l'étage, le volume de liquide contenu dans sa partie inférieure est agité par un ou plusieurs jets de vapeur provenant desdits tuyaux et favorisant le transfert de matière sous le plateau, celui-ci étant fixé aux parois de l'étage (2) ou limité par une courte jupe (6), à une courte distance de ces parois, tandis que des orifices du plateau et/ou l'espace entre le jupe et les parois permettent l'écoulement du liquide vers le point bas (8) de l'étage pendant la vidange.

Application à la distillation, permettant notamment de monter horizontalement les différents étages d'une "colonne" de distillation.

EP 0 022 114 A1

./...

Fig.3.

- 1 -

Perfectionnements aux installations de distillation

La présente invention est relative à des perfectionnements apportés aux installations de distillation et en particulier aux installations fonctionnant selon le principe de la distillation périodique.

La distillation constitue un des plus importants moyens de fractionnement dont dispose le génie chimique.

Dans une colonne de distillation continue classique, la séparation des différentes fractions volatiles est obtenue par un contact à contre-courant d'un liquide et d'une vapeur.

La colonne de distillation est constituée d'une virole généralement verticale équipée de dispositifs permettant la mise en contact intime des vapeurs qui montent depuis le bouilleur avec le liquide condensé dans un condenseur et dont la plus grande partie revient à la colonne sous forme d'un reflux qui descend par gravité dans la colonne. Au cours de ce reflux, le liquide passe par une succession d'étages dans lesquels des dispositifs assurent la mise en contact intime des vapeurs et du liquide. Ces dispositifs de mise en contact sont de différents types et sont désignés sous le terme générique de plateaux. Lorsque le reflux liquide descend ainsi d'un plateau vers le suivant, il se mélange avec un liquide qui est plus pauvre en constituants volatils. Ceci réduit l'efficacité de la séparation et l'on a par conséquent cherché à assurer une circulation améliorée du reflux, en particulier en évitant de tels mélanges.

Déjà en 1956, CANNON (Oil and Gas J. 58, 68, 1956) a indiqué qu'en pulsant le débit de vapeur, on pouvait obtenir un effet favorable sur l'efficacité de la séparation d'une colonne. Cependant, lors d'une transposition à l'échelle industrielle, on s'est aperçu que les résultats théoriques observés au laboratoire ne pouvaient être confirmés, du fait que la pulsation du débit de vapeur ne provoquait pas de manière satisfaisante un écoulement en piston du reflux (voir V.N. SCHRODT et al, Chem. Eng. Sci. 22, 759, 1967).

Afin de pallier les difficultés liées à la pulsation du débit de vapeur, on a proposé de recourir à une distillation dite périodique. Cette technique consiste à agir directement sur l'écoulement du liquide plutôt que d'agir indirectement sur celui-ci par une pulsation du débit de vapeur.

Sur base de considérations théoriques, des études et essais pratiques à l'échelle du laboratoire ont été effectués. Ces essais ont porté d'une part sur un reflux total et d'autre part sur une distillation avec production.

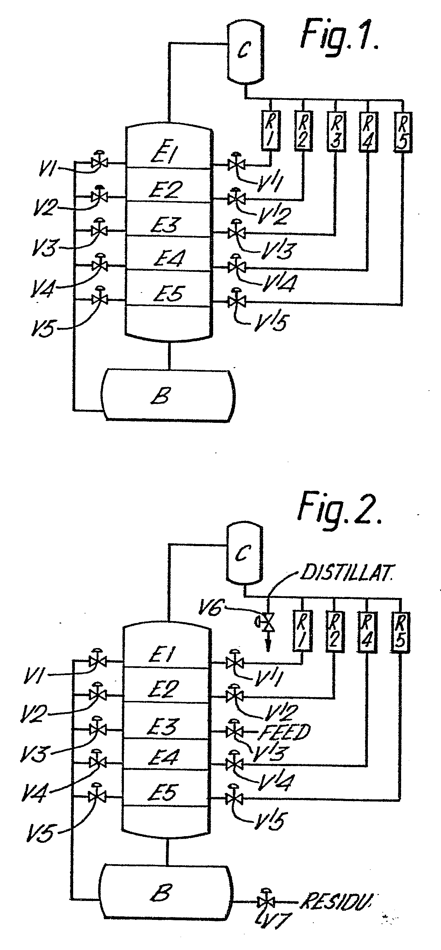

C'est ainsi qu'on a construit les installations représentés schématiquement aux figures 1 et 2.

Dans ces deux figures, B représente un bouilleur, E1 à E5 les étages successives de plateaux de distillation, R1 à R5 des réservoirs et C le condenseur. Des vannes tout ou rien représentées par V1 à V5 et V'1 à V'5 sont montées comme indiqué.

Dans le cas d'un reflux total (figure 1) la vapeur monte de manière continue dans les étages E1 à E5 et une échange de masse se réalise avec le liquide stationaire contenus dans les plateaux. Les vapeurs condensés dans le condenseur C sont recueillies successivement et les fractions sont stockées séquentiellement dans les réservoirs correspondants R1 à R5. Lorsque tous les réservoirs sont remplis jusqu'à la contenance volumétrique d'un plateau, les plateaux sont vidés dans le bouilleur et leur contenu est remplacé par les fractions recueillies. Ensuite un nouveau cycle recommence.

Dans le cas d'une distillation avec production (figure 2) on peut prévoir une alimentation sur un ou plusieurs plateaux (vanne V'3), prélever le distillat près du condenseur (vanne V6) au début du cycle et prélever du résidu (vanne V7) au bouilleur à la fin du cycle.

La théorie indique (G.BARON, PhDThesis, HAIFA Technion, Israël, 1976) que la colonne fonctionnant de cette manière présente un pouvoir séparateur double de celui d'une colonne continue.

Du fait que le reflux ne se produit plus sous l'effet de la gravité de plateau en plateau, on peut envisager de disposer une telle "colonne" horizontalement. Ceci rend cependant nécessaire le recours à une conception totalement nouvelle des plateaux.

En effet, jusqu'ici les plateaux utilisés dans les appareils de distillation périodique de laboratoire se sont avérés soit de construction simple et de rendement réduit, soit de rendement élevé mais de construction délicate.

La présente invention vise par conséquent à trouver un type nouveau de plateaux convenant pour une distillation pérodique du type décrit, c'est-à-dire dans laquelle on agit directement sur le débit de liquide.

Le but ainsi visé est obtenu dans une installation de distillation périodique du type décrit, caractérisée en ce qu'elle comporte au moins un étage répondant aux critères constructifs suivants:

- un ou plusieurs tuyaux sont disposés de manière à recueillir la vapeur provenant du bouilleur ou de l'étage précédent et à l'amener sous le plateau proprement dit;

- au moins l'un de ces tuyaux porte un dispositif empêchant le retour de liquide d'un étage vers le suivant;

- sauf pendant la vidange de l'étage, le volume de liquide contenu dans sa partie inférieure est agité par un ou plusieurs jets de vapeur sortant des tuyaux susmentionnés, de manière à favoriser le transfert de matière sous le plateau proprement dit;

- le plateau proprement dit, dont les orifices de dispersion de la vapeur sont de forme et de dimensions connues, est fixé aux parois de l'étage ou limité par une courte jupe, à une petite distance de ces parois;

- les orifices du plateau et/ou l'espace entre ladite jupe et les parois permettent l'écoulement du liquide vers le point bas de l'étage pendant la vidange.

- 4 -

Dans cette définition, l'étage est une unité individuelle de transfert de matière d'une installation de distillation, comprenant un plateau proprement dit et l'équipement auxiliaire décrit ci-dessus.

Selon une caractéristique avantageuse de l'invention, celle-ci est caractérisée en ce que l'étage est vidé complètement à la fin de chaque cycle, grâce à l'ajustement convenable des temps d'ouverture et de fermeture d'une vanne de vidange dudit étage.

L'appareil peut fonctionner soit en régime de moussage, soit, à grand débit de vapeur, en régime de nébulisation sans que l'engorgement dû à une perte de charge excessive ne soit à craindre, puisque le principe même de la distillation périodique écarte la nécessité de l'écoulement gravitaire du liquide de plateau à plateau.

L'entraînement des goutelettes peut être évité à l'aide d'appareils connus tels que chicanes ou treillis métalliques.

En vue d'obtenir une circulation adéquate du liquide visant à favoriser l'échange de matière sous le plateau, on peut, selon une variante avantageuse, concevoir l'arrivée de vapeur de manière à créer un écoulement tourbillonaire à axe vertical du liquide sous le plateau proprement dit.

Avantageusement, des baffles limitent les oscillations de la mousse, suivant une technique connue en soi.

L'invention sera décrite plus en détail en référence aux figures 3 à 6 annexées.

Ces figures représente schématiquement des modes d'exécution préférées de l'invention.

Dans la figure 3, on a représenté un étage convenant comme sur des étages E1 à E5 des figures 1 et 2.

Dans la figure 4, on a représenté la façon dont neuf étages du type de celui de la figure 3 peuvent être groupés.

Dans les figures 5 et 6, on a représenté respectivement une vue en coupe et une vue en plan d'une forme d'exécution préférée d'un détail de réalisation d'un étage.

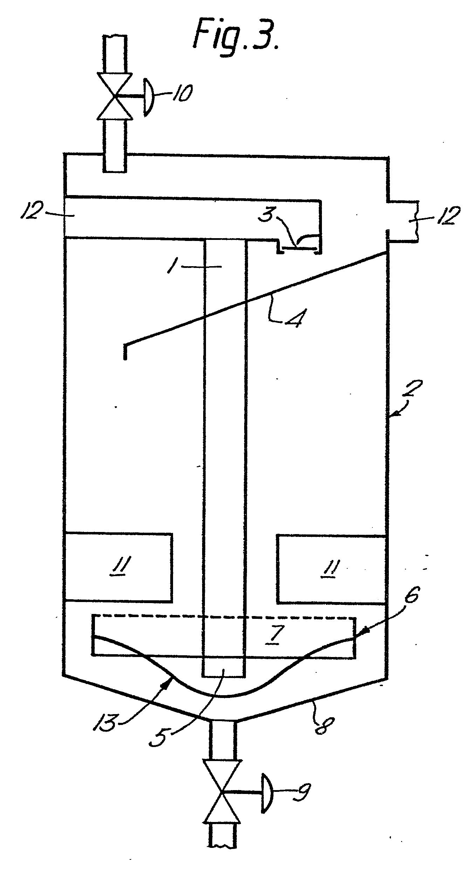

Dans l'installation représentée à la figure 3, le repère 1 représente le tuyau d'amenée de vapeur, portant le clapet anti-retour 3, et terminé par l'orifice 5. Le plateau proprement dit 7 est ici un plateau perforé, bordé d'une jupe 6 et surmonté de baffles 11. La vanne de sortie 9 est montée à l'apex du fond pyramidal 8 de l'étage. La sortie 12 de cet étage est protégée par une chicane 4. L'alimentation en liquide de l'étage se fait à travers la vanne 10. Le niveau du liquide sous le plateau prendra ici le profil schématisé par 13.

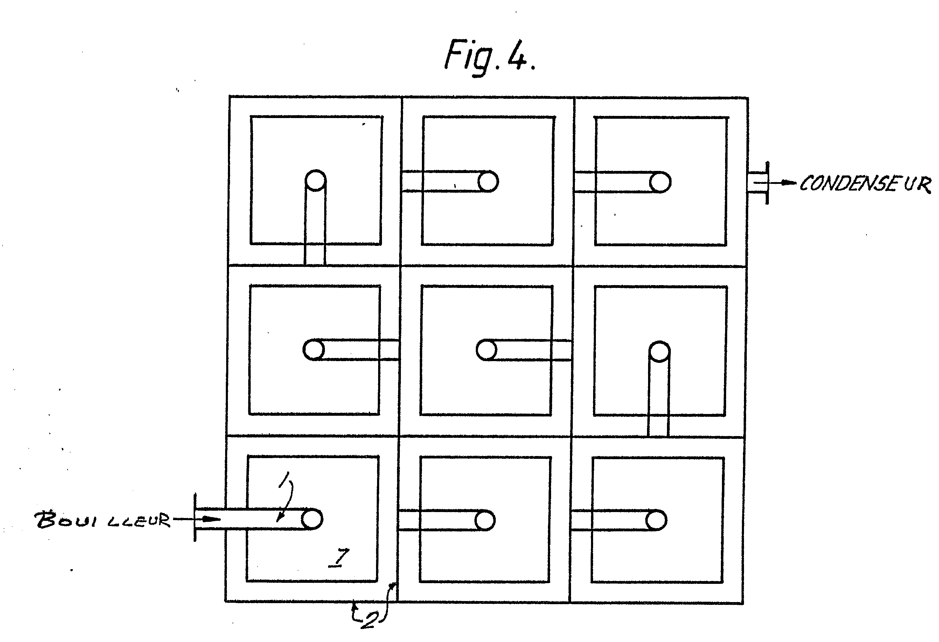

La paroi 2 peut être la paroi extérieure de la colonne du palier, ou encore une paroi intérieure séparant deux étages groupés comme, par exemple, à la figure 4.

Dans cette figure, les neuf étages de section carrées sont groupés de manière à constituer un palier de distillation de 3 x 3 étages. On y a représenté les parois 2, les plateaux 7 et les tuyaux d'amenée 1 de manière à mettre en évidence le circuit général suivi par la vapeur dans ce cas.

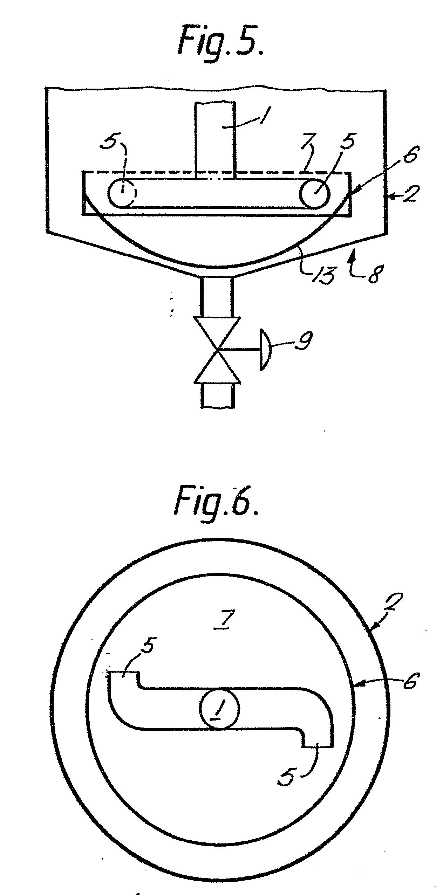

Si l'arrivée de vapeur sous le plateau est disposée comme à la figure 5 et 6, le volume de liquide sous le plateau sera le siège d'un écoulement tourbillonnaire d'axe vertical, plutôt que d'un écoulement à vortex toroïdal comme c'est le cas à la figure 3.

Bien qu'on ait décrit des modes d'exécution préférés de l'invention, il doit être bien entendu que de nombreuses variantes notamment de constructions sont possibles tout en restant dans le cadre de l'invention tel qu'il est défini par les revendications qui suivent.

0022114

Revendications

1.  Installation de distillation périodique, caractérisée en ce qu'elle comporte au moins un étage répondant aux critères constructifs suivants:

- un ou plusieurs tuyaux sont disposés de manière à recueillir la vapeur provenant du bouilleur ou de l'étage précédent et à l'amener sous le plateau proprement dit;

- au moins l'un de ces tuyaux porte un dispositif empêchant le retour de liquide d'un étage vers le suivant;

- sauf pendant la vidange de l'étage, le volume de liquide contenu dans sa partie inférieure est agité par un ou plusieurs jets de vapeur sortant des tuyaux susmentionnés, de manière à favoriser le transfert de matière sous le plateau proprement dit;

- le plateau proprement dit, dont les orifices de dispersion de la vapeur sont de forme et de dimensions connues, est fixé aux parois de l'étage ou limité par une courte jupe, à une petite distance de ces parois;

- les orifices du plateau et/ou l'espace entre ladite jupe et les parois permettent l'écoulement du liquide vers le point bas de l'étage pendant la vidange.

2.  Installation selon la revendication 1, caractérisée en ce que l'étage est vidé complètement à la fin de chaque cycle, grâce à l'ajustement convenable des temps d'ouverture et de fermeture d'une vanne de vidange dudit étage.

3.  Installation selon la revendication 1 ou 2, caractérisée en ce que l'étage est conçu pour fonctionner soit en régime de mousse, soit, à grand débit de vapeur, en régime de nébulisation.

4.  Installation selon l'une quelconque des revendications 1 à 3, caractérisée en ce que l'entraînement des goutelettes est évité à l'aide de chicanes ou treillis métalliques.

5.  Installation selon l'une quelconque des revendications 1 à 4, caractérisée en ce que l'arrivée de vapeur est conçue de manière à créer un écoulement tourbillonnaire à axe vertical du liquide sous le plateau proprement dit.

6. Installation selon l'une quelconque des revendications 1 à 5, caractérisée en ce que des baffles limitent les oscillations de la mousse.

0022114

1/4

Fig.1.

Fig.2.

## Fig.3.

# Fig.4.

CONDENSEUR

BOUILLEUR

## Fig.5.

## Fig.6.

))) **Office européen
des brevets**

**RAPPORT DE RECHERCHE EUROPEENNE**

Numéro de la demande

EP 80 87 0019.9

| Catégorie | Citation du document avec indication, en cas de besoin, des parties pertinentes | Revendication concernée |
|---|---|---|
| | **DOCUMENTS CONSIDERES COMME PERTINENTS** | |
| | FR - A - 619 029 (P. CHEVALET)<br>* positions 4 à 5 *<br>-- | 1 |
| | FR - A - 2 021 488 (STE FRANCAISE DES CONSTRUCTIONS BABCOCK & WILCOX)<br>* fig. 1 *<br>-- | 1 |
| | FR - A1 - 2 373 313 (KRASNODARSKY POLI-TEKHNICHESKY)<br>* fig. 10 *<br>-- | 5 |
| | DE - C - 372 194 (A. GASSER)<br>* fig. 1 à 4 *<br>-- | 1 |
| P | AT - B - 349 435 (VOGELBUSCH)<br>* fig. 1 *<br>-- | 1 |
| A | FR - A - 737 315 (R. VÉZIA)<br>* fig. 1 *<br>-- | |
| A | FR - E - 41 947 (R. VÉZIA)<br>* fig. 1 *<br>-- | |
| A | FR - A - 814 392 (METALLGESELLSCHAFT)<br>* fig. 1 *<br>-- | |
| A | FR - A - 1 591 064 (EURO-CAN INVEST-MENT CORP.)<br>* fig. 1a *<br>---- | |

**CLASSEMENT DE LA DEMANDE (Int. Cl.3)**

B 01 D 3/00

**DOMAINES TECHNIQUES RECHERCHES (Int. Cl.3)**

B 01 D 3/00
B 01 D 3/16
B 01 D 3/20

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche<br>Berlin | Date d'achèvement de la recherche<br>15-07-1980 | Examinateur<br>KÜHN |
|---|---|---|

OEB Form 1503.1 06.78